Europäisches Patentamt

European Patent Office

Office européen des brevets

(11) Veröffentlichungsnummer: **0 282 939**
**A2**

## (12) EUROPÄISCHE PATENTANMELDUNG

(21) Anmeldenummer: **88103975.4**

(22) Anmeldetag: **14.03.88**

(51) Int. Cl.⁴ **C03B 3/00**

(30) Priorität: **20.03.87 DE 3709178**

(43) Veröffentlichungstag der Anmeldung:
**21.09.88 Patentblatt 88/38**

(84) Benannte Vertragsstaaten:
**AT BE CH DE ES FR GB IT LI NL SE**

(71) Anmelder: **Sorg GmbH & Co. KG**
**Im Aller 23 Postfach 520**
**D-8770 Lohr/Main(DE)**

(72) Erfinder: **Waltert, Erich**
**Gartenstrasse 31**
**D-8771 Erlenbach(DE)**

(74) Vertreter: **Zapfe, Hans, Dipl.-Ing.**
**Seestrasse 2 Postfach 30 04 08**
**D-6054 Rodgau-3(DE)**

(54) **Einlegevorrichtung für Glasschmelzöfen.**

(57) Einlegevorrichtung (1) zur Aufgabe und Verteilung von Chargiermaterial durch eine Einlegeöffnung (12) auf die Schmelzbadoberfläche eines Glasschmelzofens (2). An einem beweglichen Gestell (7) sind ein Chargenbehälter (8), eine Chargiereinrichtung (10), ein Schieber (17) mit einem Schieberträger (18) und Schieberantrieb und ein die Einlegeöffnung (12) im wesentlichen abdeckender Hitzeschild (15) angeordnet, in dem mindestens eine Ausnehmung zum Durchtritt der Chargiereinrichtung (10) und des Schieberträgers (18) angeordnet ist. Zur Einhaltung einer besser geeigneten Bewegungsbahn des Schiebers (17) bei gleichzeitiger Verbesserung der Abschirmwirkung des Hitzeschildes (15) ist der Schieberträger (18) mittels einer waagrechten Linear-Führungseinrichtung (19) an einer waagrechten Plattform (20) gelagert und gegenüber dieser durch einen Horizontalantrieb (21) verschiebbar. Ferner ist die Plattform (20) mittels einer senkrechten Führungseinrichtung (30) an dem Gestell (7) gelagert und gegenüber diesem durch einen Vertikalantrieb (31) heb-und senkbar. Dadurch ist es möglich, die Antriebsbewegungen zu entkoppeln und die Durchdringungsstellen des Schieberträgers (17) durch den Hitzeschild (15) besser abzudichten.

FIG.1

## " Einlegevorrichtung für Glasschmelzöfen "

Die Erfindung betrifft eine Einlegevorrichtung zur Aufgabe und Verteilung von Chargiermaterial durch eine Einlegeöffnung auf die Schmelzbadoberfläche eines Glasschmelzofens mit einem beweglichen Gestell, das einen Chargenbehälter, eine Chargiereinrichtung, einen Schieber mit Schieberträger und Schieberantrieb für die Erzeugung einer Schieberbewegung mit waagrechten und senkrechten Komponenten und einen die Einlegeöffnung im wesentlichen abdeckenden Hitzeschild aüfweist, in dem mindestens eine Ausnehmung zum Durchtritt der Chargiereinrichtung und des Schieberträgers angeordnet ist.

Durch die DE-OS 26 25 314 und die DE-AS 29 44 349 sind Einlegevorrichtungen für Glasschmelzöfen bekannt, die keinen Hitzeschild aufweisen und bei denen die Schieber gleichfalls eine Schwenkbewegung ausführen.

Bei der Einlegevorrichtung nach der DE-OS 26 25 314 ist das "Dog-House" nach oben hin weitgehend offen, und über der Öffnung bzw. dem Schmelzenspiegel ist eine Zweistoff-Besckickungsvorrichtung für Glasscherben und feinkörniges Frittenmaterial angeordnet, wobei zuerst die Glasscherben mittels einer Rutsche eingelegt werden und nachfolgend das Frittenmaterial mittels einer Zellenradschleuse auf die Glasscherben aufgeschüttet wird. Der freie Fall des Beschickkungsguts bedingt eine starke Staubentwicklung nach innen und außen. Staub ist eine große Gefahr für das Bedienungspersonal und die Schmelzanlage: So müssen Wärmetauscher periodisch in tagelanger Arbeit von Staubablagerungen befreit werden. Für Schmelzwannen mit einer U-förmigen Flammenausbildung ist diese Beschickungsart ungeeignet. Vor dem "Dog-House" ist eine von der Beschickungsvorrichtung getrennte Verdichtungsvorrichtung angeordnet, mittels welcher die Schüttung durch eine aus horizontalen und vertikalen Komponenten zusammengesetzte Bewegung eines Druckgliedes mit einer Abstreifklinge streifenweise verdichtet, teilweise unter die Oberfläche der Glasschmelze gedrückt und streifenweise zur Schmelzzone des Ofens verschoben wird. Dies ist jedoch mit dem Nachteil verbunden, daß der Schmelzenspiegel jedesmal angehoben wird. Ein solches Oszillieren des Schmelzenspiegels ist jedoch eine sehr unerwünschte Betriebsweise. Die Verdichtungsvorrichtung besitzt eine feststehende Plattform, an der Rollenbahnen für die Längsführung der Tragarme des Druckgliedes schwenkbar befestigt sind. Die Problematik der Abdichtung des Ofeninneren gegenüber der Umgebung und der abgedichteten Durchführung der Tragarme durch den nicht vorhandenen Hitzeschild stellt sich hierbei nicht.

Durch die DE-AS 29 44 349 ist es bekannt, das Ofeninnere und den Innenraum des "Dog-Houses" anstatt durch einen Hitze schild durch eine Art zweiteilige und sehr komplizierte Kupplungsvorrichtung gegenüber der Einlegevorrichtung und der Umgebung abzuschirmen. Zum Einlegen ist eine - schrägstehende Beschickungsplatte vorgesehen, die nahezu die Breite des Dog-Houses hat und deren in das Dog-House ragende Vorderseite gleichzeitig die Funktion eines Schiebers für das Beschickungsmaterial hat. Solche Vorrichtungen sind auch als "Schurren-Einlegemaschinen" bekannt. Der Schieber wird dabei entlang eines Parallelogramms bewegt, dessen längste Seiten jedoch nicht parallel zur Schmelzenoberfläche, sondern angenähert parallel zur Beschickungsplatte verlaufen. Ein Eintauchen des Schiebers in die Schmelze kann dadurch nur am Hubende erfolgen, so daß eine nennenswerte Rührwirkung in der Schmelze nicht erfolgt. Ferner erzeugt eine solche "Schurren-Einlegemaschine" auf der Schmelzenoberfläche einen unerwünschten, ununterbrochenen "Teppich" von Chargiermaterial. Die Abdichtung der sehr breiten Beschickungsplatte ist jedoch schwierig und erfordert oberhalb der Beschickungsplatte großflächige hitzebeständige Gewebeteile für Gleitbewegungen sowie unterhalb der Beschickungsplatte eine gleichfalls hitzebeständige faltbare Gewebeschürze. Diese muß wegen der erforderlichen Flexibilität dünn sein, kann dann aber nur gegen Staub, nicht jedoch gegen Energieaustritt wirksam sein. Die Baueinheit von Beschickungsplatte und Schieber hat jedoch noch einen anderen schwerwiegenden Nachteil, und zwar hinsichtlich der Freiheitsgrade für die Bewegung des Schiebers: Da sich das Beschickungsmaterial als Schüttgut unterhalb des Silos auf der Beschickungsplatte abstützt, würde jedes Anheben der Beschickungsplatte parallel zu sich selbst auch ein Anheben des gesamten Schüttguts mit sich bringen. Infolgedessen führt die Beschickungsplatte mittels eines schwenkbaren Rahmens eine Schwenkbewegung gegenüber einem feststehenden Tragrahmen (Plattform) aus, und es ist ausdrücklich angeben, daß die Schwenkachse des besagten Rahmens praktisch mit einer Linie zusammenfalls soll, die im Bereich einer sog. Sanddichtung am unteren Ende der Austrittsöffnung des Silos liegt. Eine Parallelverschiebung der Bewegungsebene des Schiebers - scheidet also aus.

Bei derartigen Einlegevorrichtungen kommt es darauf an, das Chargiermaterial, in der Regel ein Gemenge, in gleichmäßigem und dosierbarem Mengenstrom auf die Schmelzbadoberfläche aufzubringen und auf dieser zu verteilen, damit das Chargiermaterial zum Zwecke des Aufschmelzens möglichst rasch in innige Wechselwirkung mit der Glasschmelze gebracht wird.

Durch das DE-GM 83 04 858 ist eine Einlegevorrichtung der eingangs beschriebenen Gattung bekannt, bei der zwischen Schieber und Gestell ein Hitzeschild angeordnet ist, durch den das Ende der Chargiereinrichtung, einer Vibrations-Förderrinne, in den Glasschmelzofen hineinragt. Genauer gesagt, ragt das Ende der Chargiereinrichtung in das sogenannte "Dog-House" des Schmelzofens hinein. Der Hitzeschild dient dabei zur Lösung der Aufgabe, die Einwirkung von Strahlungshitze auf die Einlegevorrichtung, insbesondere auf deren Chargiereinrichtung und den Antrieb des Schiebermechanismus zu verringern und gleichzeitig Wärmeverluste sowie Gas-und Staubaustritt aus dem Ofenraum oberhalb der Schmelzbadoberfläche herabzusetzen. Damit sich jedoch hierbei Hitzeschild und Schieberträger nicht gegegenseitig behindern, muß in dem Hitzeschild eine hinreichend große Öffnung vorgesehen sein, durch die die Wirkung des Hitzeschildes jedoch beeinträchtigt wird.

Bei der bekannten Lösung wird der Schieber durch ein am Schieberträger angreifendes Kurbelschwingengetriebe in periodische Bewegungen versetzt, bei denen die Unterkante des Schiebers bzw. Schieberblattes die Bewegungsbahn eines flachen Elliptoids beschreibt. Die Kurbel des Getriebemotors greift dabei in eine Stange ein, die in Normalenrichtung starr am Schieberträger befestigt ist. Die Schwenkachse von Schieber und Schieberträger ist am Ende einer Schwinge gelagert und führt infolgedessen oszillierende Bewegungen auf einem Kreisbogen aus, wobei das Zentrum dieser Bewegungen zwar im vorderen Bereich des Gestells, nicht aber im Bereich der Öffnung des Hitzeschildes liegt, so daß diese Öffnung entsprechend groß dimensioniert sein muß. Wegen der Komplexheit der Schieberbewegung lassen sich an der Durchdringungsstelle durch den Hitzeschild auch keine zuverlässig wirkenden Abdichtmittel anordnen, so daß die Wirkung des Hitzeschildes begrenzt ist.

Vor allem aber wird bei der bekannten Lösung die Unterkante des Schiebers bzw. Schieberblattes wegen der beschriebenen Ellipsenbahn nicht genau parallel zur Schmelzbadoberfläche bewegt, so daß die Einwirkung des Schiebers auf das bereits auf der Schmelzbadoberfläche schwimmende Chargiermaterial unterschiedlich ist, je nach dem, welchen Abstand der Schieber vom Ende der Chargiereinrichtung hat. Bekanntlich soll das Chargiermaterial auf der Schmelzbadoberfläche durch die Wirkung des Schiebers in einzelne, auf der Schmelzbadoberfläche treibende bzw. geschobene "Materialkissen" aufgeteilt werden, so daß die bereits vorhandene Glasschmelze möglichst ungehindert und allseitig auf das Chargiermaterial einwirkt.

Der Erfindung liegt daher die Aufgabe zugrunde, eine Einlegevorrichtung der eingangs beschriebenen Art dahingehend zu verbessern, daß der Schieber relativ zur Schmelzbadoberfläche auf einer besser geeigneten Bewegungsbahn geführt wird, und daß gleichzeitig die Abschirmwirkung des Hitzeschildes verbessert werden kann.

Die Lösung der gestellten Aufgabe erfolgt bei der eingangs angegebenen Einlegevorrichtung erfindungsgemäß dadurch, daß der Schieberträger mittels einer stets waagrecht ausgerichteten Linear-Führungseinrichtung an einer beweglichen, waagrechten Plattform gelagert und gegenüber dieser durch einen Horizontalantrieb verschiebbar ist, und daß die Plattform mittels einer senkrechten Führungseinrichtung parallel zu sich selbst beweglich an dem Gestell gelagert und durch einen Vertikalantrieb heb-und senkbar ist.

Die besagte "Plattform" braucht dabei nicht als geschlossene Platte ausgeführt zu sein; der Begriff ist vielmehr im Sinne einer "Bezugsplattform" zu verstehen, die die Lage des Schieberträgers und des damit verbundenen Antriebs bestimmt. Im einfachsten Fall kann die genannte Plattform aus einem Rahmen oder Rahmen streben bestehen, an denen die zum Schieber gehörenden Antriebselemente gelagert sind.

Durch die erfindungsgemäßen Maßnahmen wird hinsichtlich der Schieberführungen eine vollständige Entkopplung der waagrechten und senkrechten Bewegungskomponenten erreicht, und es läßt sich ein willkürlich beeinflußbares Zusammenspiel der waagrechten und der senkrechten Bewegungskomponenten durch eine entsprechende Steuerung der Einzelantriebe erreichen. Diese Steuerung kann beispielsweise durch einen programmierbaren Mikroprozessor erreicht werden.

Durch die erfindungsgemäße Lösung läßt sich der Schieber auf eine Bewegungsbahn bringen, die als Rechteck oder Quadrat beschrieben werden kann, wobei jeweils zwei Abschnitte dieser Bewegungsbahn parallel zur Schmelzbadoberfläche verlaufen. Die dazwischenliegenden zwei übrigen Abschnitte der Bewegungsbahn verlaufen senkrecht zur Schmelzbadoberfläche, so daß der Schieber senkrecht auf die Schmelzbadoberfläche abgesenkt und von dieser ausgehend wieder senkrecht angehoben werden kann. Auf diese Weise läßt sich eine äußerst gleichmäßige und auch gleichbleibende Aufteilung des Materialstroms in sogenannte Materialkissen erreichen, die auf der Schmelzbadoberfläche durch den Schieber vorangeschoben werden. Es kann dabei vermieden werden, daß die untere Schieberkante einerseits zu tief in die Glasschmelze eintaucht, oder daß sie andererseits am Anfang und am Ende der Schiebebewegung einen zu großen Abstand von der Schmelzbadoberfläche hat, so daß die Wirkung des Schiebers an dieser Stelle nur begrenzt ist.

Durch die erfindungsgemäßen Maßnahmen führt der Schieberträger auch keine Kipp-oder Schwenkbewegungen mehr aus, sondern relativ zur Plattform ausschließlich eine genau geradlinige und waagrechte Bewegung, so daß hierdurch die Abdichtung im Hitzeschild wesentlich verbessert werden kann.

Eine diesbezüglich besonders vorteilhafte Ausführungsform des Erfindungsgegenstandes ist gemäß der weiteren Erfindung dadurch gekennzeichnet, daß im Hitzeschild beiderseits der Ausnehmung für den Durchtritt der Chargiereinrichtung zwei weitere schlitzförmige Ausnehmungen für den Durchtritt je eines Holms des Schieberträgers angeordnet sind und daß jede der senkrechten - schlitzförmigen Ausnehmungen mit einer Abdeckplatte versehen ist, die zusammen mit der Plattform relativ zu dem am Gestell befestigten Hitzeschild und parallel zu diesem beweglich ist, wobei die Abdeckplatte den zugehörigen Holm möglichst eng umschließt.

Bei Befolgung dieser Lehre ist im Bereich des Schieberträgers weder ein Durchtritt von Hitzestrahlung, noch von Gas oder Staubteilchen möglich. Ein solcher Durchtritt ist weder im Bereich der Öffnung für die Chargiereinrichtung noch auf der Außenseite der Chargiereinrichtung möglich. Die Chargiereinrichtung ist gegenüber dem Hitzeschild durch eine Manschette abgedichtet. Im Innern der Chargiereinrichtung be findet sich aber das Chargiermaterial, das die betreffende Öffnung sehr weitgehend versperrt, so daß die Wärmestrahlung in vorteilhafter Weise bereits zum Vorheizen des Chargiermaterials verwendet werden kann. Staubpartikel werden dabei sogar durch das Chargiermaterial zum großen Teil aufgefangen und dem Schmelzofen wieder zugeführt, so daß ein Austritt an die Umgebung sehr weitgehend verhindert wird. Dadurch werden die lästigen Staubablagerungen auf den jenseits des Hitzeschildes liegenden Bauteilen der Einlegevorrichtung drastisch reduziert, vor allem aber wird die Reinheit der Arbeitsatmosphäre für das Bedienungspersonal spürbar verbessert.

Es ist dabei wiederum besonders vorteilhaft, wenn die Abdeckplatten für die Öffnungen im Hitzeschild an der Plattform befestigt sind und an der Durchdringungsstelle des zugehörigen Holms des Schieberträgers je eine mit dem Holm zusammenwirkende Schiebedichtung aufweisen.

Diese Schiebedichtung dient nicht der mechanischen Abstützung des Schieberträgers, sondern allein Abdichtzwecken, so daß ihre Lebensdauer sehr groß ist.

Es ist wiederum besonders vorteilhaft, wenn die senkrechte Führungseinrichtung für die Plattform aus vier senkrechten Führungssäulen besteht, die im Gestell angeordnet sind und an denen die Plattform über Lagergehäuse geführt ist. Die Führungssäulen können dabei mit den Säulen des Gestells identisch sein, bevorzugt aber zusätzlich zu den Säulen des Gestells vorhanden sein.

Bevorzugt ist dabei die Anordnung der zusätzlichen Führungssäulen zwischen dem unteren Rahmen des Gestells und Traversen, die jeweils zwei Säulen des Gestells miteinander verbinden, und zwar etwa auf halber Höhe des Gestells.

Als Antiebseinrichtung für die Horizontal-und Vertikalbewegung können Pneumatik-und Hydraulik-Zylinder ebenso verwendet werden, wie Spindeltriebe, Kurbel-oder Kurvengetriebe.

Weitere vorteilhafte Ausgestaltungen des Erfindungsgegenstandes ergeben sich aus. den übrigen Unteransprüchen.

Zwei Ausführungsbeispiele des Erfindungsgegenstandes werden nachfolgend anhand der Figuren 1 bis 8 näher erläutert.

Es zeigen:

Figur 1 ein erstes Ausführungsbeispiel einer Einlegevorrichtung im betriebsmäßigen Zusammenwirken mit einem Glasschmelzofen,

Figur 2 einen Ausschnitt aus Figur 1 in vergrößertem Maßstab,

Figur 3 einen Vertikalschnitt entlang der Linie III-III in Figur 1 mit einer Draufsicht auf die hinter der Schnittebene liegenden Vorrichtungsteile,

Figur 4 eine Draufsicht und einen teilweisen Horizontalschnitt entlang der Linie IV-IV in Figur 1,

Figur 5 eine Draufsicht auf den Gegenstand von Figur 2 in Richtung des Pfeils V,

Figur 6 ein zweites Ausführungsbeispiel einer Einlegevorrichtung in einer teilweise geschnittenen Seitenansicht analog Figur 1,

Figur 7 auf der linken Seite der Mittellinie eine Vorderansicht des Gegenstandes nach Figur 6 in Richtung des Pfeils VII, und rechts der Mittellinie einen Vertikalschnitt durch Figur 6 unmittelbar hinter den vorderen Säulen des Gestells, und

Figur 8 links der Mittellinie eine Draufsicht auf den Gegenstand von Figur 6 von oben, und rechts der Mittellinie einen Horizontalschnitt durch den Gegenstand von Figur 6 entlang einer Ebene, in der die Holme des Schieberträgers liegen.

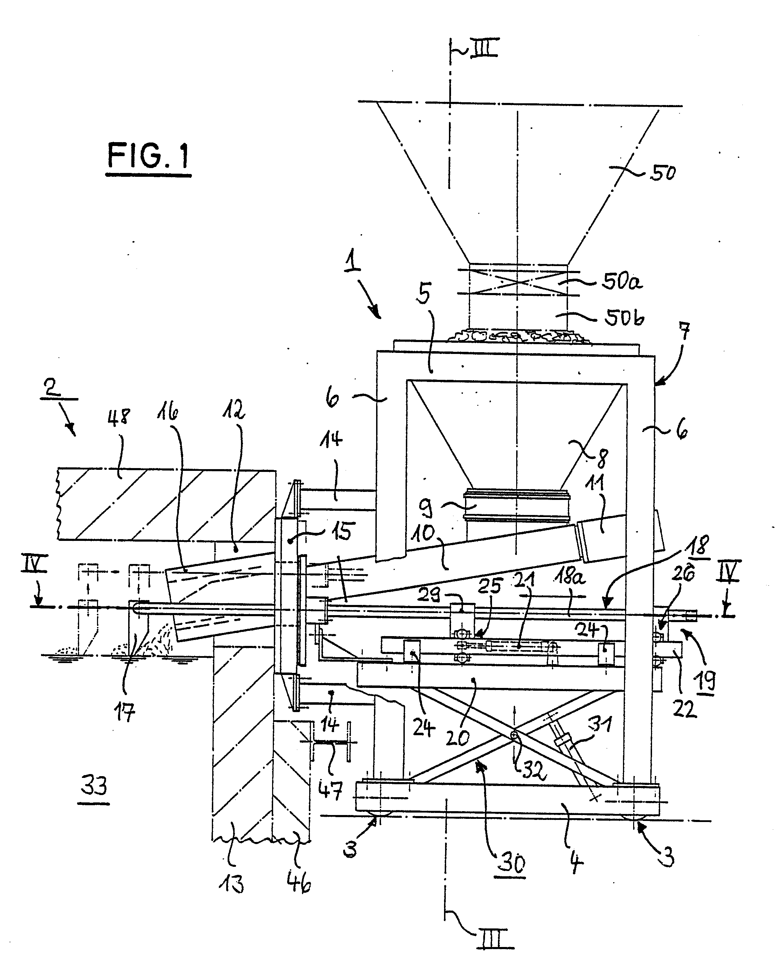

In Figur 1 ist eine vollständige Einlegevorrrichtung nach der Erfindung im betriebsmäßigen Zusammenwirken mit einem Glasschnelzofen 2 dargestellt. Zur Einlegevorrichtung gehören ein unterer, mit Schienenrädern 3 versehener Rahmen 4 und ein oberer Rahmen 5, der mit dem unteren Rahmen 4 durch Säulen 6 verbunden ist. Die Rahmen 4 und 5 bilden zusammen mit den Säulen 6 ein Gestell 7.

In den oberen Rahmen 5 ist ein Chargenbehälter 8 eingesetzt, über dem ein durch strichpunktierte Linien 50 dargestelltes Silo mit einem Verschluß 50a und einem Führungsstutzen 50b angeordnet ist. Der Chargenbehälter 8 ist als Aufgabetrichter ausgebildet und an seinem unteren Ende über eine Manschette 9 mit einer Chargiereinrichtung 10 verbunden, die als Förderrinne ausgebildet und mit einem Vibrationsantrieb 11 versehen ist. Die Chargiereinrichtung 10 ist schwach abwärts in Richtung auf eine Einlegeöffnung 12 in einer Seitenwand 13 des Glasschmelzofens 2 geneigt angeordnet. Zum Zwecke einer Dosierung des Mengenstroms ist der Vibrationsantrieb 11 stufenlos regelbar.

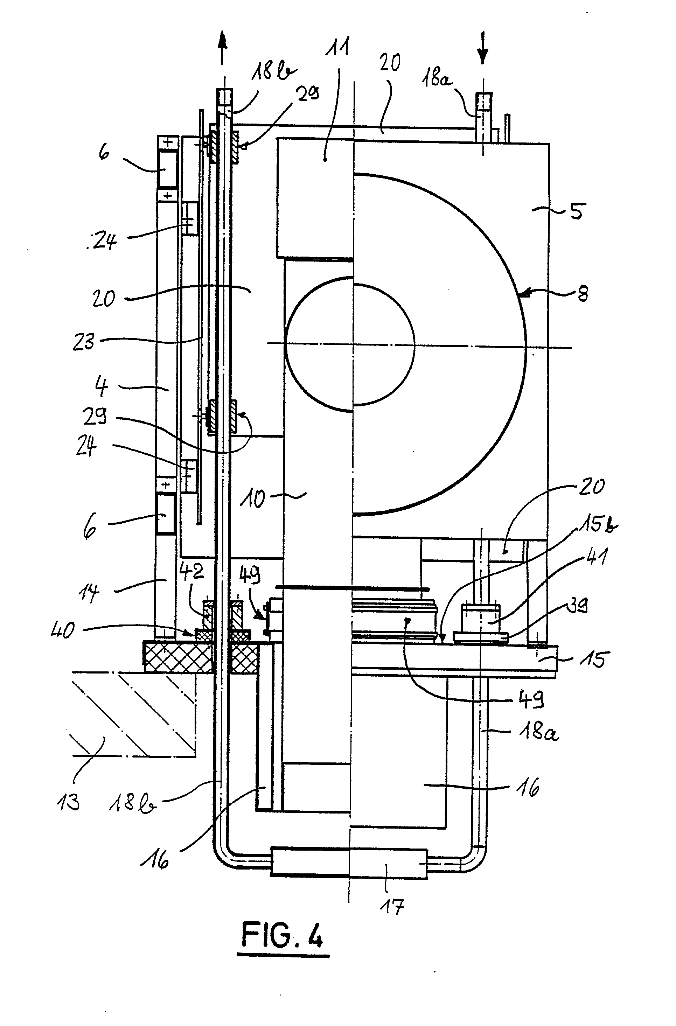

An den beiden vorderen, dem Glasschmelzofen 2 zugekehrten Säulen 6 befinden sich vier Ausleger 14, von denen zwei verdeckt sind. An diesen Auslegern ist ein Hitzeschild befestigt, dessen Einzelheiten in Figur 4 näher dargestellt sind. An dem Hitzeschild 15 ist ferner ein kastenförmiger Strahlungsschutz 16 befestigt, der die Chargiereinrichtung 10 auf demjenigen Teil ihrer Länge umgibt, mit dem sie durch den Hitzeschild 15 hindurch in den Innenraum des Glasschmelzofens 2 hineinragt. Einzelheiten werden gleichfalls anhand von Figur 4 noch näher erläutert.

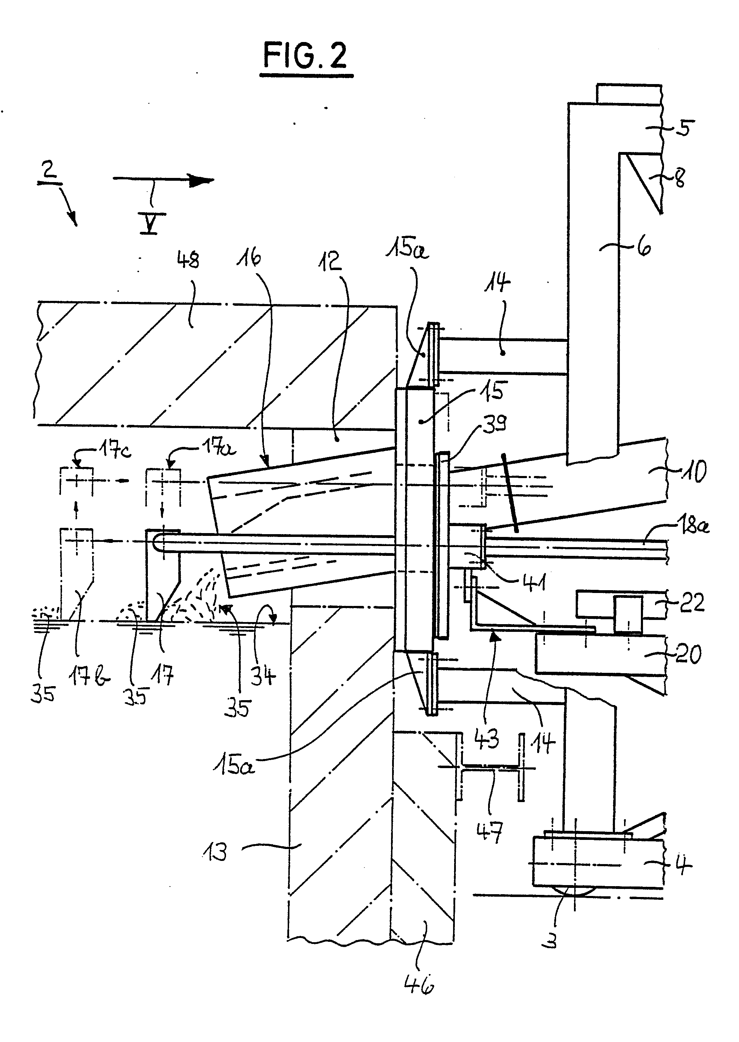

Zur Einlegevorrichtung 1 gehört ferner ein Schieber 17, der am vorderen Ende eines Schieberträgers 18 befestigt ist und mit dessen Hilfe in den Innenraum des Glasschmelzofens 2 hineinragt. Der Schieberträger 18 besteht aus zwei zueinander parallelen und waagrecht ausgerichteten Holmen 18a und 18b (Figur 4), von denen in den Figuren 1 und 2 jedoch nur einer sichtbar ist.

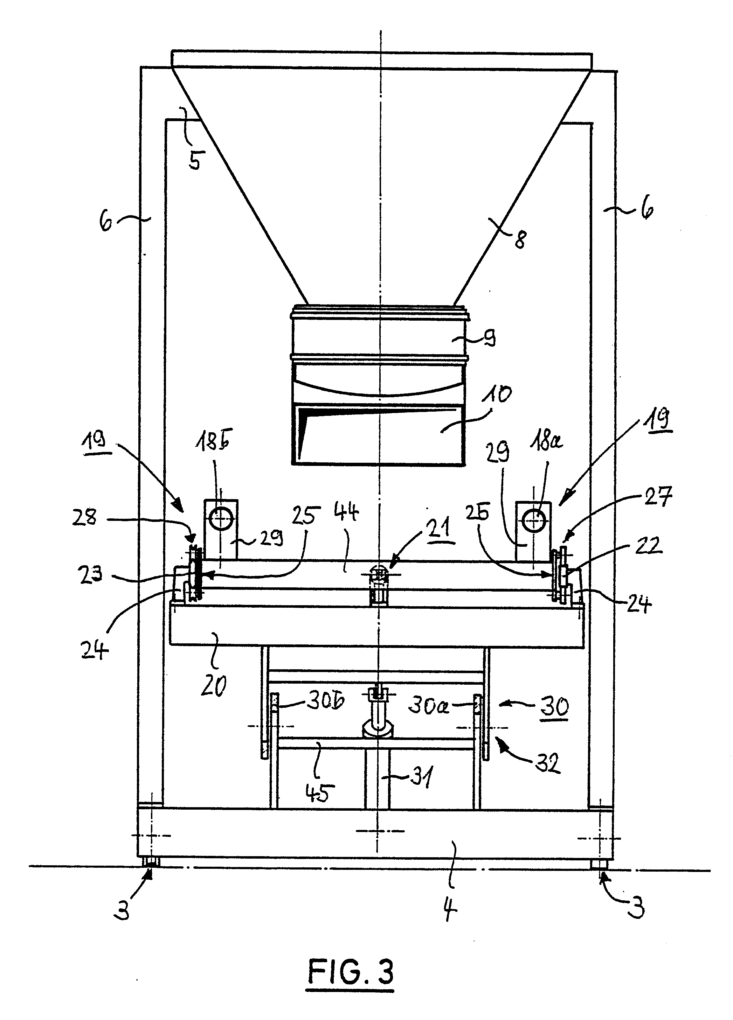

Der Schieberträger 18 ist mittels einer waagrechten Linear-Führungseinrichtung 19 an einer waagrechten Plattform 20 gelagert und gegenüber dieser durch einen Horizontalantrieb 21 verschiebbar, der anhand von Figur 3 noch näher erläutert wird. Die Linear-Führungseinrichtung 19 besteht aus zwei parallelen, auf den Hitzeschild 15 ausgerichteten Führungsschienen 22 und 23, von denen in Figur 1 wiederum nur eine sichtbar ist und die über Tragstützen 24 in der insbesondere in Figur 3 gezeigten Weise mit der Plattform 20 verbunden sind. Auf den Führungsschienen 22 und 23 sind Rollenträger 25 und 26 verfahrbar, die je ein Paar von Rollen 27 bzw. 28 aufweisen, die die Führungsschienen 22 bzw. 23 zwischen sich einschliessen. Aufgrund einer entsprechenden Profilierung, die aus Figur 3 ersichtlich ist, bildet der linke Teil der Linearführungseinrichtung jeweils ein Festlager und der rechte Teil der Linearführungseinrichtung ein Loslager.

Wie aus den Figuren ersichtlich, sind die parallelen Führungsschienen 22 und 23 an der waagrechten Plattform 20 befestigt und parallel zu dieser ausgerichtet, und die Rollenträger 25 und 26 sind ihrerseits an Tragstützen 29 befestigt, die fest mit den Holmen 18a und 18b des Schieberträgers 18 verbunden sind. Auf diese Weise ergibt sich eine weitgehend spielfreie waagrechte Linear-Führungseinrichtung für die absolut waagrechte Verschiebung des Schiebers 17.

Wie sich aus Figur 1 weiterhin ergibt, ist die Plattform 20 mittels einer senkrechten Führungseinrichtung 30 an dem Gestell 7 gelagert und gegenüber diesem durch einen Vertikalantrieb 31 heb-und senkbar. Die senkrechte Führungseinrichtung 30 ist dabei als Scherengelenksystem ausgeführt, dessen Scherengelenk 32 in senkrechter Richtung beweglich ist.

Anhand der Figur 2 werden einige weitere Details näher erläutert:

Der Glasschmelzofen 2 ist mit einer Glasschmelze 33 gefüllt, die eine Schmelzbadoberfläche 34 bildet, auf die das schütt-und rieselfähige Chargiermaterial 35 mittels der Chargiereinrichtung 10 aufgebracht wird. Die Unterteilung des Chargiermaterials in sogenannte "Materialkissen" erfolgt in der gezeigten Weise mittels des Schiebers 17. Dieser wird zunächst aus der strichpunktiert dargestellten Position 17a senkrecht in die ausgezogen dargestellte Position abgesenkt und von dort aus parallel zur Schmelzbadoberfläche 34 in die strichpunktiert dargestellte Position 17b verschoben, wobei ein Teil des Chargiermaterials 35 nach links verschoben wird. Ausgehend von dieser waagrechten Endstellung wird der Schieber 17 in die gleichfalls strichpunktiert dargestellte Position 17c angehoben und aus dieser Position wieder in die Position 17a zurückbewegt. Die rechteckige Bewegungsbahn ist im einzelnen durch Bewegungspfeile dargestellt. Diese Bewegungsbahn wird durch ein zentral gesteuertes Zusammenwirken der waagrechten Linear-Führungseinrichtung 19 und der senkrechten Führungseinrichtung 30 erreicht, ohne daß der Schieberträger 18 hierbei eine Kipp-oder Schwenkbewegung ausführen müßte.

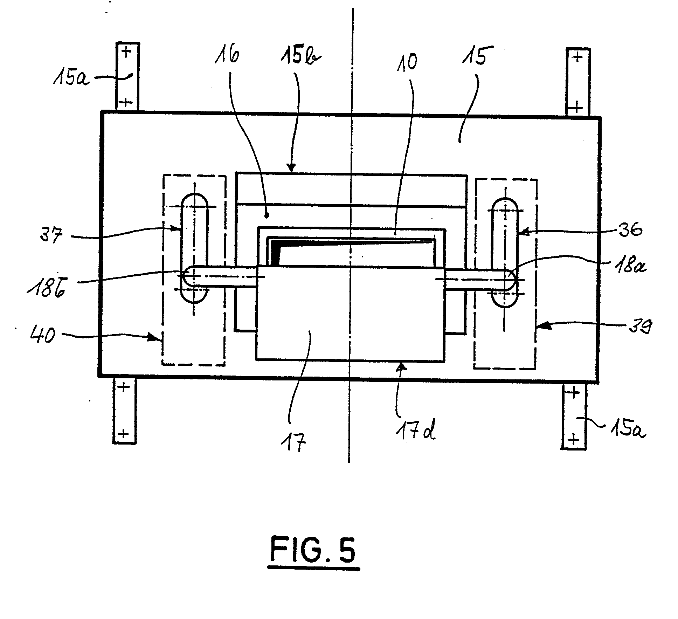

Die Durchdringung der Chargiereinrichtung 10 und des Schieberträgers 18 durch den Hitzeschild 15 wird am besten unter Zuhilfenahme der Figuren 4 und 5 verständlich.

Der Hitzeschild 15 ist beiderseits einer Ausnehmung 15b für den Durchtritt der Chargiereinrichtung 10 mit zwei weiteren schlitzförmigen Ausnehmungen 36 und 37 versehen, deren längste Achsen senkrecht verlaufen. Diese Ausnehmungen dienen für den Durchtritt der Holme 18a und 18b des Schieberträgers 18 (Figur 5). Wie insbesondere aus Figur 4 zu ersehen ist, sind die Holme 18a und 18b an ihren vorderen Enden rechtwinklig abgebogen und münden solchermaßen in den Schieber 17 ein, dessen Unterkante 17d auf die Schmelzbadoberfläche 34 ausgerichtet ist. Der Schieber 17 ist als etwa quaderförmiger Hohlkörper (mit einer abgeschrägten Unterseite) ausgebildet und wird von einem Kühlmedium durchflossen, das über die beiden Holme 18a und 18b zugeführt wird.

Jede der beiden senkrechten schlitzförmigen Ausnehmungen 36 und 37 ist mit einer Abdeckplatte 39 bzw. 40 versehen, deren Umrißlinien in Figur 5 gestrichelt dargestellt sind, da die Abdeckplatten - in Strahlungsrichtung gesehen - **hinter** dem Hitzeschild 15 liegen. Dabei wurde eine solche Überlappung gewählt, daß die Abdeckplatten 39 und 40 in jeder möglichen Stellung des Schiebers 17 die Ausnehmungen 36 und 37 zumindest strahlungsdicht verschliessen. Auch Größe und Anordnung des Hitzeschildes 15 sind so gewählt, daß dieser in seiner Betriebsposition gemäß den Figuren 1 und 2 die Einlegeöffnung 12 vollständig überdeckt bzw. soweit wie irgend möglich verschließt. Der Hitzeschild 15 ist noch mit Schraublaschen 15a versehen, mit denen er an den Auslegern 14 befestigt ist.

Die Abdeckplatten 39 und 40 besitzen an der Durchdringungsstelle des zugehörigen Holms 18a bzw. 18b je eine mit dem Holm zusammenwirkende Schiebedichtung 41 bzw. 42, deren Außenmäntel einerseits mit der zugehörigen Abdeckplatte, andererseits über je einen Ausleger 43 mit der Plattform 20 verbunden sind. Es versteht sich, daß durch entsprechende Langlöcher die Abdeckplatten 39 und 40 sowohl in waagrechter als auch in senkrechter Richtung relativ zur Plattform 20 justierbar sind. Dadurch sind die Abdeckplatten 39 und 40 zusammen mit der Plattform 20 relativ zu dem am Gestell 7 befestigten Hitzeschild 15 und parallel zu diesem beweglich. Die Schiebedichtungen 41 und 42 sind so ausgebildet, daß sie die Längsverschiebung der Holme 18a und 18b möglichst wenig behindern.

Wie aus Figur 4, linke Hälfte, hervorgeht, bestehen die Abdeckplatten 39 bzw. 40 aus einer metallischen Grundplatte und einem der Rückseite 15b des Hitzeschildes 15 zugekehrten Isolierbelag, der auf der Metallplatte auf der Rückseite des Hitzeschildes 15 gleitet.

Aus Figur 3 geht noch hervor, daß die einander paarweise und spiegelsymmetrisch gegenüberliegenden Rollenträger 25 bzw. 26 durch waagrechte Querstreben 44 miteinander verbunden sind, von denen in Figur 3 nur die vorderste zu sehen ist. Die Holme 18a und 18b sind dabei über die bereits beschriebenen senkrechten Tragstützen 29 zunächst mit den Querstreben 44 unmittelbar und dadurch mit den Rollenträgern 25 und 26 mittelbar verbunden. Bezogen auf Figur 3 verläuft die Bewegungsrichtung der waagrechten Linear-

führungseinrichtung 19 senkrecht zur Zeichenebene. Gemäß Figur 3 gehören zur senkrechten Führungseinrichtung 30 zwei parallele Scherengelenksysteme 30a und 30b, die durch einen Distanzstab 45 miteinander verbunden sind.

Aus den Figuren 4 und 5 geht noch weiterhin hervor, in welcher Weise der kastenförmig ausgebildete Strahlungsschutz 16 das in Strahlungsrichtung vor dem Hitzeschild 15 liegende Ende der Chargiereinrichtung 10 umgibt. Auch durch die Anwesenheit des Strahlungsschutzes 16 und durch eine zwischen Hitzeschild 15 und Chargiereinrichtung 10 angeordnete Manschette 49 wird die Abdichtung des Ofenraumes gegenüber dem hinter dem Hitzeschild 15 liegenden Raum spürbar verbessert. Der Strahlungsschutz 16 ist fest mit dem Hitzeschild 15 verbunden. Das untere Ende der Chargiereinrichtung 10 (Vibrations-Förderrinne) ist entsprechend der geknickten, gestrichelten Linie in Figur 2 abgeschrägt. Der Hitzeschild 15 besteht aus einer Metallplatte mit einer dem Ofen zugekehrten Isolierstoffauflage.

Es bleibt noch zu erwähnen, daß die Seitenwand 13 eine der Begrenzungswände einer Glasschmelzwanne ist, in der Glasschmelzen erzeugt werden, deren Temperaturen je nach der Glasart zwischen etwa 1200 und 1450 Grad liegen können, bei speziellen Gläsern, wie beispielsweise bei Borsilikatglas bei etwa 1600 °C und darüber. Die Glasschmelzwanne ist außen noch von einer Wannenisolierung 46 umgeben, zu der eine Ofenverankerung 47 gehört. Die Glasschmelzwanne ist nach oben hin durch eine Schutzdecke 48 abgedeckt.

Der Strahlungsschutz 16 kann als doppelwandiges Schutzrohr mit metallischen Wänden ausgebildet sein, die Zwischenräume zwischen sich einschliessen. Diese Zwischenräume können entweder mit Wärmedämmstoffen, oder aber auch mit einer Zwangskühlung durch Luft und/oder Wasseranschlüssen versehen sein.

Horizontalantrieb 21 und Vertikalantrieb 31 sind als Kolben-Zylinder-Antriebe ausgebildet und jeweils mit relativ zueinander beweglichen Teilen verbunden.

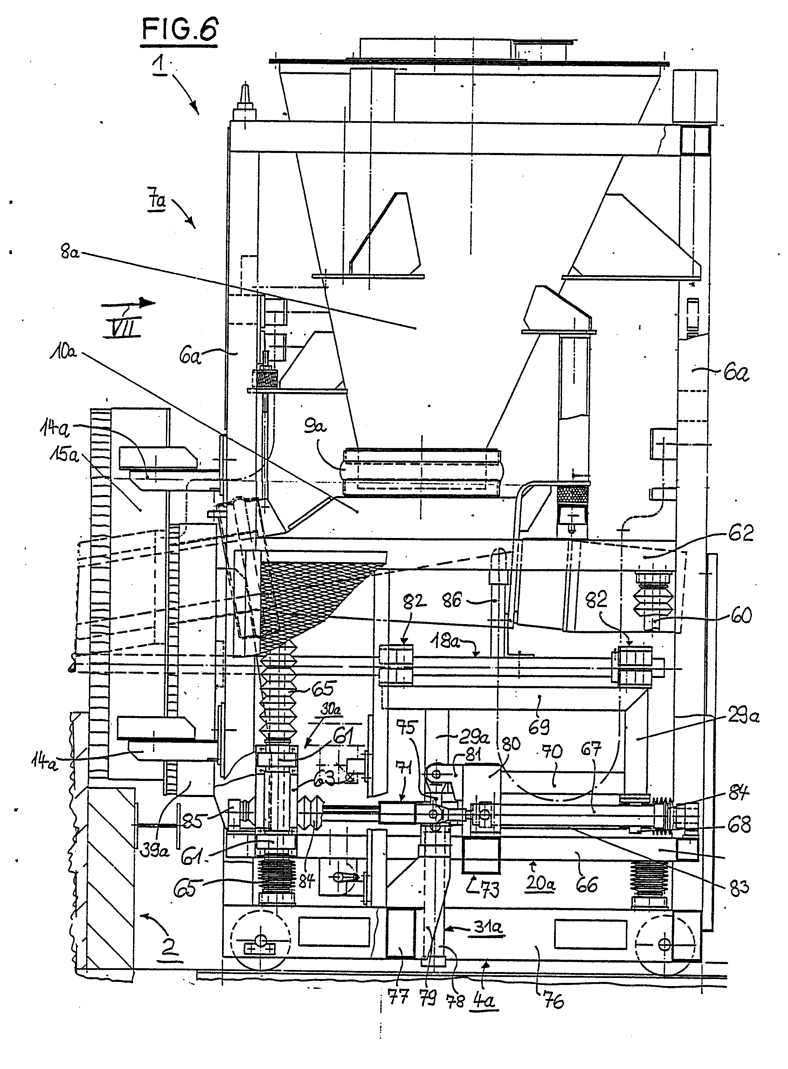

Soweit in den Figuren 6 bis 8 Teil mit gleicher oder analoger Funktion wie in den Figuren 1 bis 5 verwendet werden, werden die gleichen Bezugsziffern verwendet, jedoch ergänzt durch den Buchstabe "a".

Gemäß Figur 6 besteht die senkrechte Führungseinrichtung 30a für die Plattform 20a aus vier senkrechten Führungssäulen 60, die im Gestell 7a angeordnet sind und sich zwischen dem unteren Rahmen 4a des Gestells und Traversen 62 erstrecken, die jeweils zwei Säulen 6a des Gestells 7a miteinander verbinden. An diesen Führungssäulen 60 ist die Plattform 20a über Lagergehäuse 61 geführt.

Die senkrechten Führungssäulen 60 befinden sich an den senkrechten Außenkanten des Gestells 7a, und an jeder Führungssäule 60 sind zwei Lagergehäuse 61 geführt, die mit Abstand voneinander an jeweils einem senkrechten, mit der Plattform 20a fest verbundenen Vorsprung 63 befestigt sind. Zwischen den paarweise angeordneten Lagergehäusen 61 sind die senkrechten Führungssäulen 60 von Schutzhülsen 64 umgeben, während sie auf den den Schutzhülsen abgekehrten Seiten der Lagergehäuse von Faltenbälgen 65 umgeben sind.

Auf den zum Glasschmelzofen 2 senkrecht verlaufenden Profilen 66 der Plattform 20a sind waagrechte Führungsprofile 67 befestigt, auf denen senkrechte Tragstützen 29a für den Schieberträger 18a mittels weiterer Lagergehäuse 68 geführt sind.

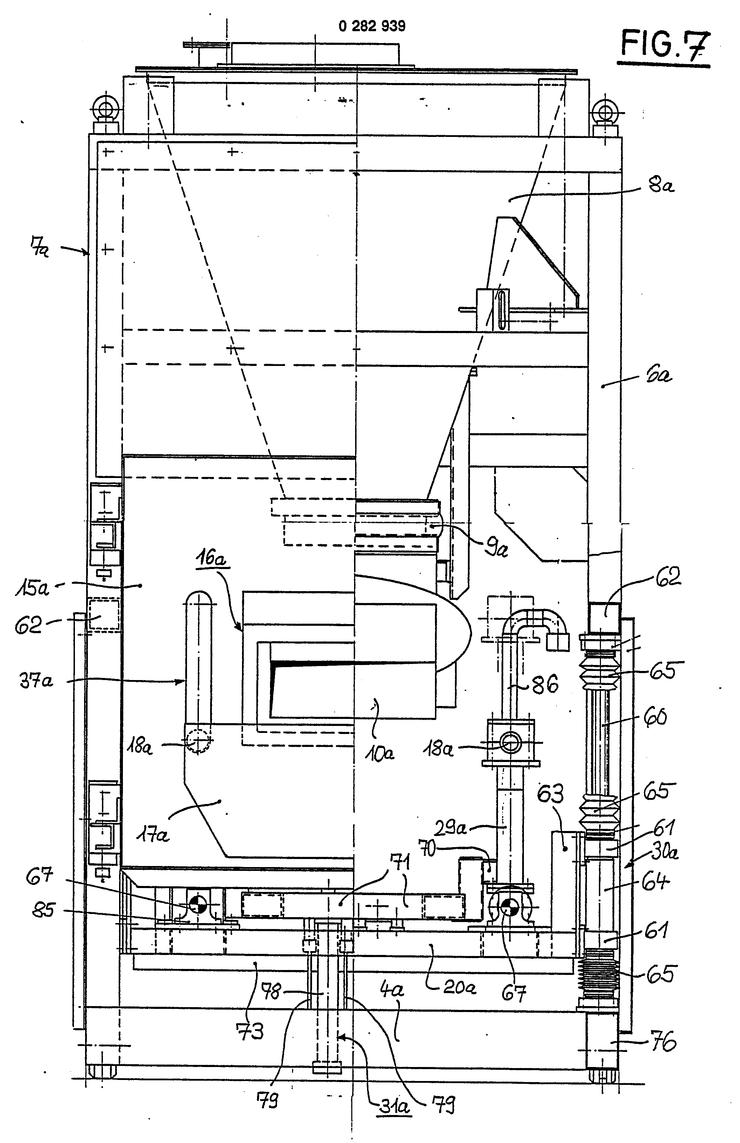

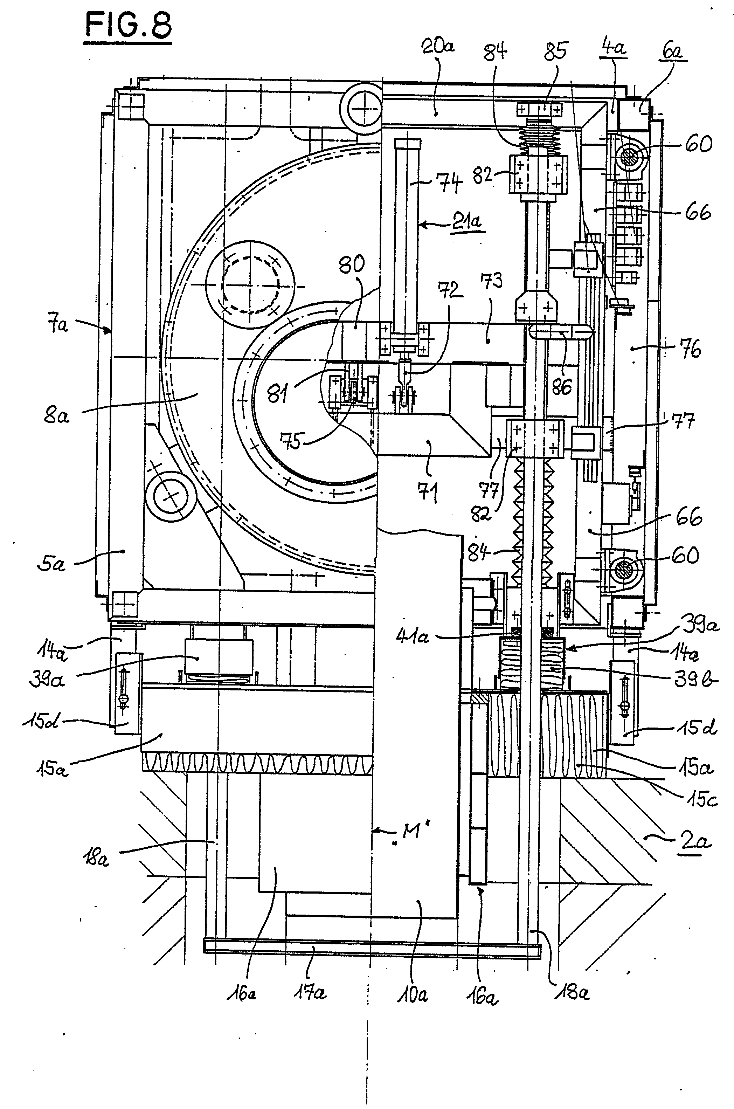

Die senkrechten Tragstützen 29a sind an ihren oberen Enden durch obere Traversen 69 und an ihren unteren Enden durch untere Traversen 70 miteinander verbunden, die parallel zu den Führungsprofilen 67 verlaufen. Die unteren Traversen 70 sind durch einen Querbügel 71 miteinander verbunden, der nach unten und in Richtung auf den Ofen 2 abgekröpft ausgebildet ist, wie dies deutlich aus den Figuren 7 und 8 zu ersehen ist. An diesem Querbügel 71 greift eine Kolbenstange 72 eines mit der Plattform 20a verbundenen Horizontalantriebs 21a an (Figur 8).

Die zum Ofen 2 senkrecht verlaufenden Profile 66 der Plattform 20a sind durch einen weiteren Querbügel 73 miteinander verbunden, auf dem der Zylinder 74 des Horizontalantriebs 21a befestigt ist, so daß der auf den Führungsprofilen 67 verschiebbare Schieberträger 18a durch Betätigung des Horizontalantriebs 21a verschoben werden kann (Figur 8).

An dem Querbügel 73, der sich gemäß den Figuren 6 und 7 etwas unterhalb der Plattform 20a erstreckt, greift die Kolbenstange 75 des mit dem Gestell 7a verbundenen Vertikalantriebs 31a an. Dies geschieht unter Zwischenschaltung eines auf dem Querbügel 73 angebrachten, nach oben ragenden Vorsprungs 80, an dem eine Gabel 81 befestigt ist, die das als Auge ausgebildete obere Ende der Kolbenstange 75 umgreift (Figuren 6 und 8). Die Verbindung wird durch einen nicht näher bezeichneten Bolzen hergestellt. Wie insbesondere aus Figur 8 hervorgeht, sind der Horizontalantrieb 21a und der Vertikalantrieb 31a beiderseits einer Mittellinie M angeordnet, die auch die vertikale Symmetrieebene der gesamten Einlegevorrichtung definiert. Durch diesen seitlichen Versatz ist eine gegenseitige Behinderung der beiden Antriebe ausgeschlossen.

Die beiden seitlichen, zum Glasschmelzofen 2 senkrecht ausgerichteten Profile 76 des unteren Rahmens 4a des Gestells 7a sind an einer innerhalb des Rahmens liegenden Stelle durch eine weitere Traverse 77 miteinander verbunden, an der der Zylinder 78 des Vertikalantriebs 31a über Ausleger 79 befestigt ist, die den Zylinder 78 gabelförmig zwischen sich einschliessen (Figuren 6 und 7).

Auf diese Weise läßt sich die Plattform 20a gegenüber dem Rahmen 4a in vertikaler Richtung anheben und absenken.

Die waagrechten Holme des Schieberträgers 18a sind durch Klemmverbindungen 82 auf den oberen Traversen 69 befestigt. Auch die waagrechten Führungsprofile 67, die einen zylindrischen Querschnitt haben, sind zwischen den paarweise angeordneten Lagergehäusen 68 durch Schutzhülsen 83 und jenseits der Lagergehäuse 68 durch Faltenbälge 84 geschützt. Die waagrechten Führungsprofile 67 sind an ihren Enden mittels Flanschverbindungen 85 mit der Plattform 20a verbunden.

Bezüglich der übrigen Vorrichtungsdetails besteht sehr weitgehende Übereinstimmung mit dem Ausführungsbeispiel nach den Figuren 1 bis 5. So ist beispielsweise auch hier in den oberen Teil des Gestells 7a ein Chargenbehälter 8a eingehängt, der über eine Manschette 9a mit der Chargiereinrichtung 10a verbunden ist. Der in der Zeichnung verdeckte Verlauf der Chargiereinrichtung 10a ist durch gestrichelte Linien angedeutet.

In analoger Weise ist an dem Gestell 7a über Ausleger 14a ein Hitzeschild 15a befestigt, dessen längliche Ausnehmungen 37a (Figur 7) in analoger Weise durch Abdeckplatten 39a in der Weise abgedeckt sind, daß die erwünschte Vertikalbewegung des Schieberträgers 18a möglich ist, ohne daß eine Stelle der Ausnehmungen 37a freigelegt würde.

Aus den Figuren 7 und 8 ist noch zu entnehmen, daß die Holme des Schieberträgers 18a geradlinig verlaufen und an ihren Enden senkrecht in den zu diesem Zwecke verbreiterten Schieber 17a einmünden. Auf diese Weise lassen sich beispielsweise hier nicht näher gezeichnete Knotenbleche zwischen dem Schieberträger 18a und dem mechanisch hoch beanspruchten Schieber 17a anbringen. In Figur 7 ist noch eine der Anschlußleitungen 86 für das Kühlwasser des Schiebers 17a gezeigt.

Figur 8 sind noch einige nähere Details der Schiebedichtung 41a an der Abdeckplatte 39a zu entnehmen. Es ist zu erkennen, daß die Abdeckplatte 39a aus einem kastenförmigen, einseitig offenen Metallgehäuse besteht, das eine Masse aus Mineralfasern 39b umgibt. Auf der geschlossenen Seite des Metallgehäuses befindet sich die besagte Schiebedichtung 41a. Auch das Hitzeschild 15a ist als kastenförmiges, einseitig offenes Metallgehäuse ausgebildet und trägt in seinem Innern eine Masse aus Mineralfasern 15c, die aus dem Metallgehäuse in Richtung auf den Ofen 2a vorsteht, damit eine Abdichtwirkung gewährleistet ist. An dem Hitzeschild 15a befinden sich auf gegenüberliegenden Seiten Tragwinkel 15d, die über Langlöcher mit den Auslegern 14a am Gestell 7a verschraubt sind, so daß eine horizontale Justierung möglich ist.

Der obere Rahmen 5a des Gestells 7a ist hier nur (links) zur Hälfte dargestellt, und auch der Strahlungsschutz 16a für das vordere Ende der Chargiereinrichtung 10a ist nur teilweise gezeigt, da die geometrischen Verhältnisse durchaus auch den Figuren 1 und 2 entnommen werden können.

**Ansprüche**

1. Einlegevorrichtung (1) zur Aufgabe und Verteilung von Chargiermaterial (35) durch eine Einlegeöffnung (12) auf die Schmelzbadoberfläche (34) eines Glasschmelzofens (2) mit einem beweglichen Gestell (7), das einen Chargenbehälter (8, 8'), eine Chargiereinrichtung (10), einen hiervon getrennten Schieber (17) mit einen Schieberträger (18) und einem Schieberantrieb (21, 31) für die Erzeugung einer Schieberbewegung mit waagrechten und senkrechten Komponenten und einen die Einlegeöffnung (12) im wesentlichen abdeckenden Hitzeschild (15) aufweist, in dem mindestens eine Ausnehmung (36, 37, 38) zum Durchtritt der Chargiereinrichtung (10) und des Schieberträgers (18) angeordnet ist, dadurch gekennzeichnet, daß der Schieberträger (18) mittels einer stets waagrecht ausgerichteten Linear-Führungseinrichtung (19) an einer beweglichen, waagrechten Plattform (20) gelagert und gegenüber dieser durch einen Horizontalantrieb (21) verschiebbar ist und daß die Plattform mittels einer senkrechten Führungseinrichtung (30) parallel zu sich selbst beweglich an dem Gestell (7) gelagert und durch einen Vertikalantrieb (31) heb-und senkbar ist.

2. Einlegevorrichtung nach Anspruch 1, dadurch gekennzeichnet, daß die waagrechte Linearführungseinrichtung (19) zwei parallele, auf den Hitzeschild (15) ausgerichtete Führungsschienen (22, 23) aufweist, von denen jede mit zwei Rollenträgern (25, 26) zusammenwirkt.

3. Einlegevorrichtung nach Anspruch 2, dadurch gekennzeichnet, daß die parallelen Führungsschienen (22, 23) an der waagrechten Plattform (20) und parallel zu dieser und die Rollenträger (25, 26) an zwei parallelen, den Schieberträger (18) bildenden Holmen (18a, 18b) befestigt sind.

4. Einlegevorrichtung nach Anspruch 3, dadurch gekennzeichnet, daß im Hitzeschild (15) beiderseits einer Ausnehmung (36) für den Durchtritt der Chargiereinrichtung (10) zwei weitere -

schlitzförmige Ausnehmungen (36, 37) für den Durchtritt je eines Holms (18a, 18b) des Schieberträgers (18) angeordnet sind und daß jede der senkrechten schlitzförmigen Ausnehmungen (36, 37) mit einer Abdeckplatte (39, 40) versehen ist, die zusammen mit der Plattform (20) relativ zu dem am Gestell (7) befestigten Hitzeschild (15) und parallel zu diesem beweglich ist, wobei die Abdeckplatte (39, 40) den zugehörigen Holm (18a, 18b) möglichst eng umschließt.

5. Einlegevorrichtung nach Anspruch 4, dadurch gekennzeichnet, daß die Abdeckplatten (39, 40) an der Plattform (20) befestigt sind und an der Durchdringungsstelle des zugehörigen Holms (18a, 18b) je eine mit dem Holm zusammenwirkende Schiebedichtung (41, 42) aufweisen.

6. Einlegevorrichtung nach Anspruch 5, dadurch gekennzeichnet, daß die Abdeckplatten (39, 40) aus einer metallischen Grundplatte und einem der Rückseite (15b) des Hitzeschilds (15) zugekehrten Isolierbelag bestehen.

7. Einlegevorrichtung nach Anspruch 3, dadurch gekennzeichnet, daß die einander paarweise und spiegelsymmetrisch gegenüberliegenden Rollenträger (25, 26) durch waagrechte Querstreben (44) miteinander verbunden sind.

8. Einlegevorrichtung nach Anspruch 6, dadurch gekennzeichnet, daß die Holme (18a, 18b) über senkrechte Tragstützen (29) mit den Querstreben (44) verbunden sind.

9. Einlegevorrichtung nach Anspruch 1, dadurch gekennzeichnet, daß die senkrechte Führungseinrichtung (30) für die Plattform (20) als Scherengelenksystem ausgeführt ist, wobei das Scherengelenk (32) in senkrechter Richtung beweglich ist.

10. Einlegevorrichtung nach Anspruch 1, dadurch gekennzeichnet, daß die senkrechte Führungseinrichtung (30a) für die Plattform (20a) aus vier senkrechten Führungssäulen (60) besteht, die im Gestell (7a) angeordnet sind und an denen die Plattform (20a) über Lagergehäuse (61) geführt ist.

11. Einlegevorrichtung nach Anspruch 10, dadurch gekennzeichnet, daß die Führungssäulen (60) sich zwischen dem unteren Rahmen (4a) des Gestells (7a) und Traversen (62) erstrecken, die jeweils zwei Säulen (6a) des Gestells (7a) miteinander verbinden.

12. Einlegevorrichtung nach Anspruch 10, dadurch gekennzeichnet, daß an jeder senkrechten Führungssäule (60) zwei Lagergehäuse (61) geführt sind, die mit Abstand voneinander an jeweils einem senkrechten, mit der Plattform (20a) verbundenen Vorsprung (63) befestigt sind.

13. Einlegevorrichtung nach Anspruch 12, dadurch gekennzeichnet, daß die senkrechten Führungssäulen (60) zwischen den paarweise angeordneten Lagergehäusen (61) von Schutzhülsen (64) umgeben sind, während sie auf den den Schutzhülsen abgekehrten Seiten der Lagergehäuse von Faltenbälgen (65) umgeben sind.

14. Einlegevorrichtung nach Anspruch 10, dadurch gekennzeichnet, daß auf den zum Glasschmelzofen (2) senkrecht verlaufenden Profilen (66) der Plattform (20a) waagrechte Führungsprofile (67) befestigt sind, auf denen senkrechte Tragstützen (29a) für den Schieberträger (18a) mittels weiterer Lagergehäuse (68) geführt sind.

15. Einlegevorrichtung nach Anspruch 14, dadurch gekennzeichnet, daß die senkrechten Tragstützen (29a) an ihren oberen und unteren Enden durch obere und untere Traversen (69 bzw. 70) miteinander verbunden sind, die parallel zu den Führungsprofilen (67) verlaufen, und daß die unteren Traversen (70) durch einen Querbügel (71) miteinander verbunden sind, an dem die Kolbenstange (72) eines mit der Plattform (20a) verbundenen Horizontalantriebs (21a) angreift.

16. Einlegevorrichtung nach Anspruch 14, dadurch gekennzeichnet, daß die zum Ofen (2) senkrecht verlaufenden Profile (66) der Plattform (20a) durch einen weiteren Querbügel (73) miteinander verbunden sind, auf dem der Zylinder (74) des Horizontalantriebs (21a) befestigt ist und an dem die Kolbenstange (75) des mit dem Gestell (7a) verbundenen Vertikalantriebs (31a) angreift.

17. Einlegevorrichtung nach Anspruch 14, dadurch gekennzeichnet, daß die beiden seitlichen, zum Glasschmelzofen (2) senkrecht ausgerichteten Profile (76) des unteren Rahmens (4a) des Gestells (7a) an einer innerhalb des Rahmens (4a) liegenden Stelle durch eine weitere Traverse (77) miteinander verbunden sind, an der der Zylinder (78) des Vertikalantriebs (31a) über Ausleger (79) befestigt ist.

FIG.1

# FIG.2

## FIG. 3

**FIG. 4**

FIG.5

0 282 939

FIG.6

0 282 939

0 282 939

FIG.7

FIG.8

0 282 939